# EUROPÄISCHE PATENTSCHRIFT

(11) **EP 1 376 627 B1**
(45) Veröffentlichungstag und Bekanntmachung des Hinweises auf die Patenterteilung: **02.02.2011**
(21) Anmeldenummer: 03007078.3
(22) Anmeldetag: 28.03.2003
(51) Int. Cl.: H01H 9/06, H02K 23/18

(54) **Handwerkzeugmaschine mit einer Vorrichtung zur Rechtslauf- und Linkslaufumschaltung eines Elektromotors**
Hand-held machine tool with device for clockwise and anti-clockwise commutation of an electromotor
Machine-outil portative avec un dispositif pour la commutation de marche à droite et à gauche d'un moteur électrique

(30) Priorität: 21.06.2002 DE 10227782
(43) Veröffentlichungstag der Anmeldung: 02.01.2004
(73) Patentinhaber: ROBERT BOSCH GMBH, 70442 Stuttgart (DE)
(72) Erfinder: Buck, Manfred, 72622 Nuertingen (DE); Baumann, Otto, 70771 Leinfelden-Echterdingen (DE); Fehrle, Siegfried, 70771 Leinfelden-Echterdingen (DE); Ullrich, Andre, 70794 Filderstadt-Bernhausen (DE); Weiss, Michael, 70193 Stuttgart (DE); Schmid, Hardy, 70563 Stuttgart (DE)

(56) Entgegenhaltungen:
- EP-A- 0 790 697
- DE-A1- 3 731 079

## Beschreibung

### Stand der Technik

Die vorliegende Erfindung betrifft eine Handwerkzeugmaschine mit einer Vorrichtung zur Rechtslauf- und Linkslauf-Umschaltung eines Elektromotors, wobei die Vorrichtung ein den Kollektor des Motors ringförmig umschließender, um die Achse des Kollektors drehbar gelagerter Kohlebürstenhalter ist, dessen Mantelfläche mindestens ein radial abstehendes Griffelement aufweist, welches durch ein im Gehäuse der Handwerkzeugmaschine ausgelassenes Fenster ragt.

Eine derartige Handwerkzeugmaschine mit umschaltbarem Rechtslauf- und Linkslaufbetrieb ist beispielsweise aus der DE 37 31 079 A1 bekannt. Über ein oder mehrere an der Mantelfläche des ringförmigen Kohlebürstenhalters angeformte Griffelemente, welche durch ein oder mehrere in das Maschinengehäuse eingelassene Fenster herausragen, lässt sich für den Bediener der Werkzeugmaschine eine Umschaltung der Drehrichtung des Elektromotors sehr leicht handhaben. Für die Umschaltung von einer Drehrichtung in die andere Drehrichtung des Motors muss der Kohlebürstenhalter um einen bestimmten Winkel um die Achse des Kollektors gedreht werden. Dieser Drehwinkel wird durch die Abmessungen des Fensters im Maschinengehäuse, aus dem ein Griffelement am Kohlebürstenhalter heraussteht, dadurch begrenzt, dass dieses Griffelement an zwei gegenüber liegenden Rändern jeweils einen Anschlag für den Linkslaufbetrieb und für den Rechtslaufbetrieb findet.

### Vorteile der Erfindung

Gemäß den Merkmalen des Anspruchs 1 ist derjenige Bereich der Mantelfläche des Kohlebürstenhalters, der in dem mindestens einen Fenster im Gehäuse der Handwerkzeugmaschine erscheint, mit Luftdurchtrittsöffnungen versehen. Somit wird vorteilhafterweise das für die Betätigung des drehbaren Kohlebürstenhalters vorhandene Fenster im Gehäuse der Handwerkzeugmaschine dazu ausgenutzt, um dem Motor bzw. einer elektronischen Schaltung im Inneren der Handwerkzeugmaschine kühle Luft von aussen zuzuführen bzw. aufgeheizte Luft aus dem Inneren der Handwerkzeugmaschine nach aussen abzuleiten. Damit können zusätzliche in das Gehäuse der Handwerkzeugmaschine eingelassene Lüftungsschlitze entfallen.

Vorteilhafte Weiterbildungen der Erfindung gehen aus den Unteransprüchen hervor.

Es ist zweckmäßig, zu beiden Seiten des mindestens einen Griffelements, die mit in Drehrichtung des Kohlebürstenhalters gegenüberliegenden Rändern des Fensters Anschläge bilden, Luftdurchtrittsöffnungen in der Mantelfläche des Kohlebürstenhalters einzulassen. Diese Luftdurchtrittsöffnungen können beispielsweise Schlitze sein, die sich in Drehrichtung des Kohlebürstenhalters erstrecken.

### Zeichnung

Anhand eines in der Zeichnung dargestellten Ausführungsbeispiels wird nachfolgend die Erfindung näher erläutert. Es zeigen:
Figur 1 eine perspektivische Darstellung eines Kohlebürstenhalters und
Figur 2 eine Seitenansicht einer Handwerkzeugmaschine mit einem in deren Gehäuse eingelassenen Fenster, durch das eine Verdrehung des Kohlebürstenhalters vorgenommen werden kann.

### Beschreibung eines Ausführungsbeispiels

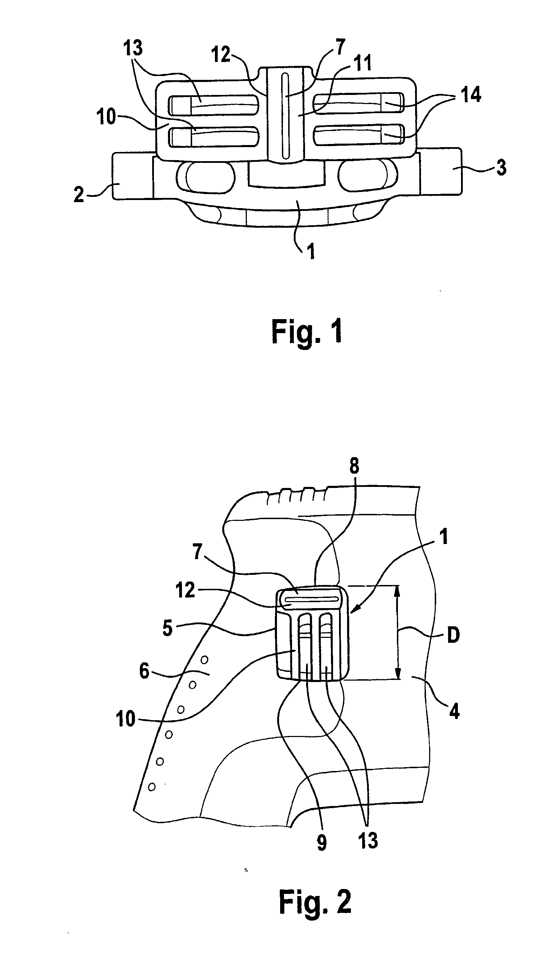

In der Figur 1 ist eine perspektivische Ansicht auf die Mantelfläche eines ringförmigen Kohlebürstenhalters 1 dargestellt. Auf eine detaillierte Funktionsbeschreibung eines solchen Kohlebürstenhalters wird hier verzichtet, weil zum Einen seine elektrische Funktion nicht Gegenstand der Erfindung ist und zum Anderen solche Kohlebürstenhalter zur Rechtslauf- und Linkslauf-Umschaltung eines Elektromotors bereits zum Stand der Technik gehören (vergleiche die eingangs zitierte DE 37 31 079 A1). So viel sei zumindest zu der Funktion eines Kohlebürstenhalters mit Rechtslauf- und Linkslauf-Umschaltung gesagt, dass er den Kollektor eines Elektromotors ringförmig umschließt, und um die Achse des Kollektors um einen gewissen Winkel drehbar gelagert ist. Durch eine Verdrehung des Kohlebürstenhalters 1 erfolgt über die darin angeordneten, mit Stromzuführungsleitungen kontaktierten Kohlebürsten 2, 3 eine Umpolung der Ankerwicklungen mit der Folge, dass sich die Drehrichtung des Motors umkehrt.

Damit von einem Bediener der Handwerkzeugmaschine die für eine Drehrichtungsumkehr erforderliche Verdrehung des Kohlebürstenhalters 1 vorgenommen werden kann , ist, wie in einer Seitenansicht einer Handwerkzeugmaschine in Figur 2 dargestellt, in das Gehäuse 4 der Handwerkzeugmaschine im Bereich des Kohlebürstenhalters 1 ein Fenster 5 eingelassen. Vorzugsweise wird nicht nur an einer Seite der Handwerkzeugmaschine ein Fenster 5, sondern auch symmetrisch dazu an der gegenüberliegenden, in der Zeichnung nicht dargestellten Seite des Gehäuses 4 ebenfalls ein Fenster vorgesehen. Im Fenster 5 des Gehäuses 4 der Handwerkzeugmaschine erscheint die Mantelfläche 10 des drehbar gelagerten Kohlebürstenhalters 1. Bei Handwerkzeugmaschinen, z. B. Bohrmaschinen, Schraubern und dergleichen, mit einem pistolenartigen Handgriff wird das Fenster 5 durch eine U-förmige Aussparung in einem als Deckel ausgebildeten, mit dem übrigen Gehäuse 4 verbindbaren Griff 6 realisiert. Das Fenster 5 kann im Prinzip an jeder anderen Stelle des Maschinengehäuses platziert sein, aber immer dort, wo der Kohlebürstenhalter 1 in der Maschine aufgrund der Lage des Motors angeordnet ist.

Um die für einen Laufrichtungswechsel des Motors erforderliche Verdrehung des Kohlebürstenhalters 1 vornehmen zu können, ist auf der Mantelfläche 10 des Kohlebürstenhalters 1 ein radial nach aussen abstehendes Griffelement 7 vorgesehen, auf das der Bediener der Handwerkzeugmaschine durch das Fenster 5 einen Zugriff hat.

Dieses Griffelement 7 ist beispielsweise als eine quer zur Schwenkrichtung des Kohlebürstenhalters 1 verlaufende Rippe ausgebildet. Sind, wie oben erwähnt, mehrere Fenster in das Gehäuse 4 eingelassen, so befindet sich in jedem dieser Fenster ein Griffelement 7 auf der Mantelfläche des Kohlebürstenhalters 1.

Zwei in Drehrichtung des Kohlebürstenhalters 1 gegenüberliegende Ränder 8 und 9 des Fensters 5 stellen Anschläge dar für das Griffelement 7 am Kohlebürstenhalter 1. Dabei sind die beiden Ränder 8 und 9 des Fensters 5 in einem solchen Abstand D voneinander angeordnet, dass bei Anschlag des Griffelements 7 am Rand 8 oder am Rand 9 des Fensters 5 jeweils eine einer bestimmten Drehrichtung zugeordnete Schaltposition des Kohlebürstenhalters 1 erreicht ist.

In der Mantelfläche 10 des Kohlebürstenhalters 1 sind zu beiden Längsseiten 11 und 12 des Griffelements 7 Luftdurchtrittsöffnungen 13 und 14 eingelassen. Diese Luftdurchtrittsöffnungen 13 und 14 sind vorzugsweise als Schlitze ausgebildet, die sich in Drehrichtung des Kohlebürstenhalters 1 erstrecken. Egal in welcher Schaltposition, am oberen Rand 8 oder am unteren Rand 9 des Fensters 5, das Griffelement 7 steht, sind im Fenster 5 entweder die Luftdurchtrittsöffnungen 13 oder die Luftdurchtrittsöffnungen 14 in der Mantelfläche 10 des Kohlebürstenhalters 1 sichtbar. Diese Luftdurchtrittsöffnungen 13, 14, welche sich in dem im Fenster 5 erscheinenden Bereicht der Mantelfläche 10 des Kohlebürstenhalters 1 befinden, ermöglichen den Eintritt von kühler Luft in das Innere der Werkzeugmaschine bzw. den Austrittt von warmer Luft aus der Werkzeugmaschine nach aussen , so dass der Elektromotor im Inneren der Werkzeugmaschine und eventuell dort angeordnete elektronische Schaltungen eine gute Kühlung erfahren.

## Patentansprüche

1. Handwerkzeugmaschine mit einer Vorrichtung zur Rechtslauf- und Linkslauf-Umschaltung eines Elektromotors, wobei die Vorrichtung ein den Kollektor des Motors ringförmig umschließender, um die Achse des Kollektors drehbar gelagerter Kohlebürstenhalter (1) ist, dessen Mantelfläche (10) mindestens ein radial abstehendes Griffelement (7) aufweist, welches durch ein im Gehäuse (4) der Handwerkzeugmaschine ausgelassenes Fenster (5) ragt, **dadurch gekennzeichnet, dass** derjenige Bereich der Mantelfläche (10) des Kohlebürstenhalters (1), der in dem mindestens einen Fenster (5) erscheint, mit Luftdurchtrittsöffnungen (13, 14) versehen ist.

2. Handwerkzeugmaschine nach Anspruch 1, **dadurch gekennzeichnet, dass** zu beiden Seiten des mindestens einen Griffelements (7), die mit in Drehrichtung des Kohlebürstenhaltes (1) gegenüberliegenden Rändern (8, 9) des Fensters (5) Anschläge bilden, Luftdurchtrittsöffnungen (13, 14) in der Mantelfläche (10) des Kohlebürstenhalters (1) eingelassen sind.

3. Handwerkzeugmaschine nach einem der Ansprüche 1 oder 2, **dadurch gekennzeichnet, dass** die Luftdurchtrittsöffnungen (13, 14) Schlitze sind, die sich in Drehrichtung des Kohlebürstenhaltes (1) erstrecken.

## Claims

1. Portable power tool with a device for clockwise and anticlockwise commutation of an electromotor, wherein the device is a carbon brush holder (1) which encloses the collector of the motor in an annular manner and is rotatably mounted about the axis of the collector, and the lateral surface (10) of which has at least one radially projecting grip element (7) which projects through a window (5) cut out in the housing (4) of the portable power tool, **characterized in that that** region of the lateral surface (10) of the carbon brush holder (1) which appears in the at least one window (5) is provided with air passage openings (13, 14).

2. Portable power tool according to Claim 1, **characterized in that** air passage openings (13, 14) are made in the lateral surface (10) of the carbon brush holder (1) on both sides of the at least one grip element (7), said sides forming stops with edges (8, 9) of the window (5) which are opposite one another in the direction of rotation of the carbon brush holder (1).

3. Portable power tool according to either of Claims 1 and 2, **characterized in that** the air passage openings (13, 14) are slots which extend in the direction of rotation of the carbon brush holder (1).

## Revendications

1. Machine-outil portative avec un dispositif pour la commutation de marche à droite et à gauche d'un moteur électrique, le dispositif étant un porte-balai de charbon (1) entourant le collecteur du moteur de manière annulaire et monté à rotation autour de l'axe du collecteur, dont la surface d'enveloppe (10) présente au moins un élément de préhension saillant radialement (7), qui pénètre à travers une fenêtre (5) pratiquée dans le boîtier (4) de la machine-outil portative, **caractérisée en ce que** la région de la surface d'enveloppe (10) du porte-balai de charbon (1) qui est visible dans l'au moins une fenêtre (5), est pourvue d'ouvertures de passage d'air (13, 14).

2. Machine-outil portative selon la revendication 1, **caractérisée en ce que** des deux côtés de l'au moins un élément de préhension (7), qui forment des butées avec des bords opposés (8, 9) de la fenêtre (5) dans le sens de rotation du porte-balai de charbon (1), sont pratiquées des ouvertures de passage d'air (13, 14) dans la surface d'enveloppe (10) du porte-balai de charbon (1).

3. Machine-outil portative selon l'une quelconque des revendications 1 ou 2, **caractérisée en ce que** les ouvertures de passage d'air (13, 14) sont des fentes qui s'étendent dans la direction de rotation du porte-balai de charbon (1).
